# EUROPEAN PATENT APPLICATION

(11) **EP 4 249 447 A1**
(43) Date of publication of application: **27.09.2023**
(21) Application number: 22163439.7
(22) Date of filing: 22.03.2022
(51) Int. Cl.: C04B 24/26, C04B 28/02, C04B 28/14

(54) **PROCESSES FOR THE PRODUCTION OF POLYCARBOXYLATE ETHER COPOLYMERS IN THE SOLID STATE, POLYCARBOXYLATE ETHER COPOLYMERS IN THE SOLID STATE PRODUCED THEREBY, AND MINERAL BINDER COMPOSITIONS COMPRISING THE SAME**

(71) Applicant: Sika Technology AG, 6340 Baar (CH)
(72) Inventor: HAMPEL, Christina, 5406 Rütihof (CH); ZIMMERMANN, Jörg, 8400 Winterthur (CH); WEIDMANN, Jürg, 8404 Winterthur (CH)
(74) Representative: Sika Patent Attorneys

(57) **Abstract**

The present invention relates to processes for the production of polycarboxylate ether copolymers in the solid state, polycarboxylate ether copolymers in the solid state produced thereby, and mineral binder compositions comprising the same. Processes of the invention comprise the steps of providing a first type of monomer, treating the first type of monomer with an acid, providing a second type of monomer, copolymerizing the acid-treated first type of monomer and the second type of monomer to obtain a copolymer which is a polycarboxylate ether, and transferring the copolymer thus obtained into the solid state.

## Description

### Technical Field

The present invention relates to processes for the production of polycarboxylate ether copolymers in the solid state, said polycarboxylate ether copolymers in the solid state having a low amount of double-bond isomer. Specifically, the polycarboxylate ether copolymers of the present invention are prepared from alkoxylation products of alcohols having a terminal C-C double bond and having a low content of regioisomer where the double bond is shifted. The present invention also relates to such polycarboxylate ether copolymers in the solid state and mineral binder compositions comprising the same.

### Background of the invention

Dispersants are used in the construction industry as plasticizers or water-reducing agents for mineral binders and/or mineral binder compositions, such as concrete, mortar, cements, gypsum, and lime. Organic polymers are generally used as dispersants. Such organic polymers are added to the mixing water or added as solids to the binder or binder composition. In this way, both the consistency of the binder composition during processing and the properties in the cured state can be changed in an advantageous way. The choice and dosage of a suitable dispersant depends in particular on the specific composition, the processing technique, and the intended use of the binder or binder composition.

In practice, high-performance plasticizers in the form of polycarboxylate ether copolymers (PCE) are often used as dispersants for mineral binders or mineral binder compositions, for example to improve the flow behavior of mineral binder compositions. The use of polycarboxylate ether copolymers in the solid state is especially required where mineral binder compositions in a ready-to-mix form are to be prepared. Examples of such ready-to-mix mineral binder compositions are dry mortars or ready-mix gypsum compositions, often supplied in paper bags.

PCE based on ethylenically unsaturated carboxylic acids and alkoxylation products of ethylenically unsaturated alcohols, in particular alkoxylated allyl alcohol, methallyl alcohol and/or isoprenyl alcohol, are particularly useful in many aspects. Such PCE are for example described in EP 1437330 (Nippon Shokubai).

Polycarboxylate ether copolymers in the solid state are also well known, for example from WO 00/47533 (SKW), US 7030178 (Kao Corp), WO 2006/133933 (Degussa Construction Polymers), and WO 2006/129883 (Nippon Shokubai).

EP 2152771 (Nippon Shokubai) and EP 2465836 (Nippon Shokubai) teach that where an increased content of regioisomers where the double bond is shifted is comprised in alkoxylation products of methallyl alcohol or isoprenyl alcohol, this does reduce the plastification effect of copolymers prepared from acrylic acid and the respective alkoxylated alcohol in cementitious mixtures. In other words, it is desirable for a good plastification effect of polycarboxylate ethers in cementitious mixtures to control and/or reduce the content of regioisomers where the double bond is shifted in the constituting monomers. This also extends to polycarboxylate ether copolymers in the solid state.

The EP 2152771 and EP 2465836 teach that a lower reaction temperature in the alkoxylation reaction of methallyl alcohol or isoprenyl alcohol will lead to a reduced amount present of the respective regioisomers where the double bond is shifted. However, a lower reaction temperature is not always desirable, especially where fast reaction is needed. Additionally, it can be desirable to further reduce the content of regioisomers where the double bond is shifted in alkoxylation products of ethylenically unsaturated alcohols after the alkoxylation reaction is terminated.

Regioisomers where the double bond is shifted are also called double-bond isomers within the present context.

There is thus a need for polycarboxylate ether copolymers in the solid state, useful as dispersants for mineral binder compositions, said polycarboxylate ether copolymers in the solid state having a low amount of regioisomers where the double bond is shifted. There is further a need for processes for the preparation of polycarboxylate ether copolymers in the solid state having a reduced content of regioisomers where the double bond is shifted.

### Summary of the invention

It is an object of the present invention to provide processes for the production of polycarboxylate ether copolymers in the solid state which are based on alkoxylation product of alcohols having a terminal C-C double bond and having a low amount of regioisomers where the double bond is shifted and/or a low amount of structural units derived from such regioisomers. It is also an object of the present invention to provide such polycarboxylate ether copolymers in the solid state. It is a further objective of the present invention to provide mineral binder compositions comprising such polycarboxylate ether copolymers in the solid state.

Surprisingly, it has been found, that double-bond isomers of alkoxylation products of alcohols having a terminal C-C double bond can be significantly reduced by an acid treatment of the respective alkoxylated alcohol. This especially applies to alkoxylation products of methallyl alcohol or isoprenyl alcohol where the double-bond is shifted.

Thus, the objective of the present invention could be solved by a process as claimed in claim 1. Further aspects of the present invention are the subject matter of the independent claims.

Processes of the present invention are particularly efficient in reducing the double-bond isomers of alkoxylation products of alcohols having a terminal C-C double bond. Such double-bond isomers can in particular be reduced to very low levels, such as below 10 wt%, preferably below 5 wt%, more preferably below 1 wt%, still more preferably below 0.5 wt%, especially below 0.01 wt%. Without wishing to be bound by theory, it is believed that the reduction is due to protonation of the shifted double bond with subsequent cleavage of the polyether chain by water. At the same time, the amount of alkoxylation products of alcohols having a terminal C-C double bond lost is neglectable. Also, processes of the present invention are simple and can be implemented easily and with low cost in existing production facility for the production of polycarboxylate ether copolymers.

Polycarboxylate ether copolymers in the solid state obtained in a process of the present invention can be used as dispersants for mineral binder compositions. Especially, polycarboxylate ether copolymers in the solid state obtained in a process of the present invention are useful to increase the flow properties of a mineral binder composition at a given amount of water present. Also, polycarboxylate ether copolymers in the solid state obtained in a process of the present invention are useful in reducing the amount of water needed to achieve desired flow properties of a given mineral binder composition. Finally, polycarboxylate ether copolymers in the solid state obtained in a process of the present invention are useful to reduce bleeding from a mineral binder composition.

Preferred embodiments of the present invention are the subject matter of dependent claims.

### Ways for carrying out the invention

In a first aspect the present invention relates to a process for the production of a polycarboxylate ether copolymer in the solid state, said process comprising the steps of
a) providing a first type of monomer having the general structure (I), 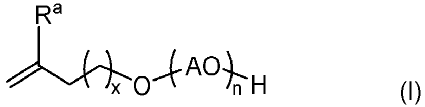 where
   R^{a} is H or methyl,
   AO is a C2 - C12 oxyalkylene group,
   x=0, 1,
   n = 2 - 350,
b) treating the first type of monomer provided in step a) with an acid,
c) providing at least one second type of monomer having the general structure (II) 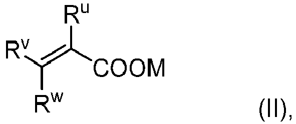 where
   R^{u}, R^{V} independently from each other is H or methyl,
   R^{w} is H or COOM,
   where M is H, an alkali metal, an alkaline earth metal, or an ammonium ion, or, where R^{w} is COOM, a ring may be formed between adjacent COOM groups,
d) copolymerizing the monomer obtained in step b) and the monomer provided in step c) to obtain a copolymer which is a polycarboxylate ether, and
e) transferring the copolymer obtained in step d) into the solid state, where a liquid, preferably water, is added in step a) and/or b) and/or d).

According to preferred embodiments, in the above formula (I), R^{a} is methyl, AO is an oxyethylene group or an oxypropylene group, x = 0 or 1, and n = 2 - 350. It is especially preferred that the first type of monomer provided in step a) is an ethoxylated methallyl alcohol or is an ethoxylated isoprenyl alcohol or is a propoxylated methallyl alcohol or is a propoxylated isoprenyl alcohol.

Preferred monomers of the second type having the general structure (II) and provided in step c) are acrylic acid, methacrylic acid, maleic acid, or salts of any of these with alkali metal, alkaline earth metal, or ammonium, or maleic anhydride. Mixtures of any of these monomers are also possible.

Typically, the first type of monomer of the general structure (I) and provided in step a) comprises regioisomers where the double bond is shifted as impurities. Within the present context, the term impurity always relates to regioisomers where the double bond is shifted. Regioisomers where the double bond is shifted have the following general structure (III) 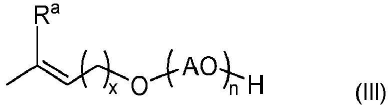 where
R^{a} is H or methyl,
AO is a C2 - C12 oxyalkylene group,
x=0, 1,
n = 2 - 350.

Of course, any of R^{a}, AO, x, and n in an impurity of the general structure (III) is the same as R^{a}, AO, x, and n of the monomer of the general structure (I) containing said impurity.

Thus, according to embodiments, in a process of the present invention the first type of monomer provided in step a) and having the general structure (I) comprises an impurity of the general structure (III), 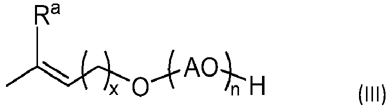 where
R^{a}, AO, x, and n are as defined for the general structure (I).

Within the present context the general structures (I) and (III) are meant to encompass both, the respective cis and trans isomers. That means, that a monomer of the general structure (I) as well as an impurity of the general structure (III) comprises a double bond which is either in the cis-configuration or the trans-configuration or is a mixture of cis- and trans-configuration.

The amount of an impurity of the general structure (III) present in a monomer of the general structure (I) typically is between 0.01 and 10 wt%, relative to the total dry weight of the monomer of the general structure (I). However, it may also be lower or higher. The amount of an impurity of the general structure (III) present in a monomer of the general structure (I) is reduced by step b) of a process of the present invention. It is possible, in step b) of a process of the present invention, to reduce the amount of an impurity of the general structure (III) present in a monomer of the general structure (I) to not more than 10 wt%, preferably not more than 5 wt%, more preferably not more than 1 wt%, still more preferably not more than 0.5 wt%, especially not more than 0.01 wt%, in particular below 0.01 wt%, in each case relative to the total dry weight of the first type of monomer of general structure (I). A reduction to 0 wt%, within the present context, means that the content is reduced below the lowest detection limit of the detection method used.

The content of an impurity of the general structure (III) present in a monomer of the general structure (I) can be measured by HPLC. Any suitable HPLC method known to the person skilled in the art may be used within the present context. A preferred HPLC protocol is as follows: stationary phase: column MGII 100 Å, 5 µm, 10 mm (I.D.) × 250 mm manufactured by Shiseido Fine Chemicals; mobile phase: mixture of acetonitrile and water (45:55 by volume); sample preparation: 10% solution of sample in the eluent; mode: inject 100 µL of sample, measure at a flow rate of 1.0 mL/min, at a column temperature of 40°C; detector: Waters 2414 RI detector; analysis software: Empower 2 by Waters.

Another method to measure the content of an impurity of the general structure (III) present in a monomer of the general structure (I) is ¹H-NMR.

The amount of an impurity of the general structure (III) present in a monomer of the general structure (I) in wt% can be calculated from results of HPLC or ¹H-NMR measurements.

According to embodiments, in a process of the present invention, in step b) the content of the impurity of the general structure (III) in the first type of monomer of general structure (I) is reduced to not more than 10 wt%, preferably not more than 5 wt%, more preferably not more than 1 wt%, still more preferably not more than 0.5 wt%, especially not more than 0.01 wt%, in particular below 0.01 wt% in each case relative to the total dry weight of the first type of monomer of general structure (I).

It is possible to carry out a step b) of a process of the present invention in substance. This means that the monomer of the general structure (I) may be treated with in the absence of any solvent or other auxiliary material. For example, the monomer of the general structure (I) may be heated to above its softening or melting point and then treated with the acid.

It is, however, preferred, to carry out a step b) of a process of the present invention in solution or dispersion, preferably in solution. It is especially preferred, that the monomer of the general structure (I) is dissolved in a liquid, preferably in water, prior to or during step b). The acid treatment is then carried out in such solution in liquid, preferably in water. This allows for a particularly efficient reaction.

According to embodiments, in a process of the present invention, the acid used in step b) has a pKa value of not more than 4.5, preferably not more than 2, more preferably not more than 0.

The acid can be a mineral acid, an organic acid, or a mixture thereof.

According to embodiments, the acid used in step b) is selected from the group consisting of hydrohalic acids, preferably hydrochloric acid or hydrobromic acid, perchloric acid, chloric acid, iodic acid, sulfuric acid, sulfonic acids, preferably methane sulfonic acid, 2-acrylamido-2-methylpropane sulfonic acid or para-toluene sulfonic acid, nitric acid, nitrous acid, phosphoric acid, oxalic acid, chloroacetic acid, trifluoroacetic acid, citric acid, formic acid, lactic acid, ascorbic acid, benzoic acid, picric acid, maleic acid, acrylic acid, or acidic ion exchange resins or acidic silicates such as H-zeolithes. Mixtures of two or more of any of these acids are also possible. According to embodiments, the acid can be used in a liquid form. A liquid form can be the pure acid in liquid form or a solution or dispersion of the acid in a liquid, especially in water. Preferred acids in liquid form are hydrochloric acid in water, phosphoric acid in water, sulfuric acid in water, maleic acid in water, oxalic acid, formic acid, and acrylic acid. According to other embodiments, the acid can also be in the form of a solid. The use of a solid acid can be advantageous as its removal from a mixture comprising the monomer of the general structure (I) is simple. A solid acid may be a pure acid which is solid under the reaction conditions of a process of the present invention. A solid acid may also be an acid attached to a solid support or an acid adsorbed on a solid support. Suitable solid support materials include polystyrene, polyethylene glycol, polyacrylate, cellulose, silica, glass, and sheet silicates. Preferred acids in solid form are para-toluene sulfonic acid on solid support, citric acid, maleic acid, and H-zeolithes. Mixtures of two or more of any of these acids are also possible.

Where step b) of a process of the present invention is carried out in solution or dispersion in water, it is preferred that the pH during the treatment with acid is equal to or lower than 3.5, preferably equal to or lower than 3.0, more preferably equal to or lower than 2.5, especially equal to or lower than 2.0.

In step b) of a process of the present invention, it is generally preferred to add the acid to the monomer of the general structure (I). Addition of the acid can be by any conventional means. It is, for example, possible to add the acid for the treatment to the monomer of the general structure (I) in a storage tank, in a container, or in a reaction vessel. According to embodiments, in step b) of the present invention, an acid is provided as an aqueous solution, the monomer of the general structure (I) is dissolved or dispersed in the aqueous acid thus prepared, and the acid treatment is then carried out. According to other embodiments, in step b) of the present invention the monomer of the general structure (I) is dissolved or dispersed in water, the acid is added to the resulting solution or dispersion, and the acid treatment is then carried out.

Step b) of the process of the present invention can be carried out with or without stirring. It is preferred that the process of the present invention is carried out with stirring. Stirring refers to stirring of the monomer of the general structure (I) prior to addition of the acid, during addition of the acid and/or for a defined reaction period after addition of the acid. The duration of the acid treatment is not particularly limited. According to embodiments, the treatment of the monomer of the general structure (I) with an acid is carried out for a duration between 5 min and 24 hours, preferably 10 min and 12 hour, especially 1 hour and 8 hours. It is possible to carry out step b) in a wide temperature range and especially at elevated temperature. It is, however, preferable to carry out step b) at a temperature of between 15 - 100°C, preferably 20 - 60°C, and at a pressure of 1013 mbar. It is also possible to carry out the acid treatment at a reduced pressure. According to embodiments, step b) is carried out at a temperature of between 15 - 100°C, preferably 20 - 60°C, and a pressure of appr. 1013 mbar.

It is preferred, that the acid use for the treatment in step b) is neutralized or partially neutralized after the treatment. Neutralization can, for example, be done with a strong base such as NaOH. A process of the present invention may thus additionally comprise a step b1) of neutralization of the acid used for the treatment in step b).

The process of the present invention comprises a step d) of copolymerizing the monomer obtained in step b) and the monomer provided in step c) to obtain a copolymer which is a polycarboxylate ether. Suitable condition for the production of polycarboxylate ether by copolymerization are known to the person skilled in the art and are for example described in EP 1437330 (examples 1-1 to 3-3) or in EP 1103570 (examples 1-1 to 1-13).

In particularly preferred embodiments of the present invention the monomer mixture copolymerized in step d) of the present invention are mixtures of at least one, preferably one, of ethoxylated methallyl alcohol or is an ethoxylated isoprenyl alcohol or is a propoxylated methallyl alcohol or is a propoxylated isoprenyl alcohol and at least one of acrylic acid, methacrylic acid, maleic acid, or salts of any of these with alkali metal, alkaline earth metal, or ammonium, or maleic anhydride.

According to embodiments, maleic acid and acrylic acid may be used as the acid in step b) and as a second monomer provided in step c) of a process of the present invention. It is, however, preferred that the second monomers provided in step c) are different from the acid used in step b).

It is necessary, in a process of the present invention, that a liquid, preferably water, is added in step a) and/or b) and/or d). The liquid, preferably water, can be added in step a) to provide a solution or dispersion of the first type of monomer having the general structure (I). The liquid, preferably water, can alternatively or in addition be added in step b), for example as a solution or dispersion of the acid. The liquid, preferably water, can alternatively or in addition be added in step d).

According to particularly preferred embodiments, water is added in step a) to provide a solution or dispersion of the first type of monomer having the general structure (I), and additional water is added in step d) before starting the copolymerization.

There is no particular limitation as to the amount of liquid, preferably water, added in any of steps a) and/or b) and/or d). It can, however, be preferred to adjust the amount of liquid, preferably water such, that the polycarboxylate ether copolymer obtained in step d) has a ratio of at least 20 wt%, more preferably at least 40 wt%, and up to 75 wt%, each based on the total weight of the mixture obtained in step d).

According to embodiments, the copolymer which is a polycarboxylate ether is obtained in step d) as a solution or dispersion in water with a ratio of the copolymer which is a polycarboxylate ether of 20 - 75 wt%, preferably 40 - 60 wt%.

The copolymer obtained in step d) of a process of the present invention is transferred into the solid state in step e).

Within the present context, the term "solid state" means that a material is in the solid physical state at 20 °C and 1013 mbar. Thus, a polycarboxylate ether copolymer in the solid state is a polycarboxylate ether copolymer which is solid at 20 °C and 1013 mbar. In other words, a polycarboxylate ether copolymer in the solid state has a softening or melting point of > 20 °C at 1013 mbar.

Typically, polycarboxylate ether copolymers in the solid state are in the form of powders or flakes.

According to embodiments, in step e) of a process of the present invention the copolymer obtained in step d) is transferred into the solid state by spray drying, oven drying, vacuum drying, drying in a fluidized bed, dielectric drying, supercritical drying, or lyophilization, preferably by spray drying. It is possible that additional chemical drying agents are used.

A particularly preferred method for use in step e) is spray drying. Spray-drying is a known method for producing a dry powder from a liquid by spraying in combination with rapidly drying the solution. Drying can be performed with a hot gas, preferably hot air or hot nitrogen. It is possible that the hot gas is blown in the same direction as the sprayed liquid. It is likewise possible that the hot gas is blown in the opposite direction as the sprayed liquid. The liquid is dispersed with a spray nozzle or an atomizer, the inlet being preferably in the upper part of a spray tower. The dried powder can be separated from the hot gas by means of a cyclone.

According to embodiments, the pH of an aqueous solution of the polycarboxylate ether copolymer is adjusted to >7, preferably >9, especially >10 prior to spray-drying. Such pH of an aqueous solution of the polycarboxylate ether copolymer used for spray-drying leads to a finer particle size of the polycarboxylate ether copolymer in the solid state and to a powder with less tendency for caking. According to embodiments, the pH of an aqueous solution of the polycarboxylate ether copolymer is adjusted according to the number n of repeating units -[AO]-. As the number n increases, the pH is increased to prevent stickiness and caking during spray-drying. According to embodiments, the pH is adjusted by the addition of oxides or hydroxides of alkali metals, alkali earth metals or mixtures thereof. Preferably, the pH of an aqueous solution of the polycarboxylate ether copolymer is adjusted by the addition of NaOH, KOH, MgO, Mg(OH)₂, CaO, or Ca(OH)₂, most preferred is Ca(OH)₂.

Preferably, an aqueous solution of a polycarboxylate ether copolymer is pre-heated before entering the spray dryer. If no gas is used for the drying, the polycarboxylate ether copolymer solution can be introduced into the spray dryer at a pressure of between 0.2 and 40 MPa. If a gas is used for the drying, the polycarboxylate ether copolymer solution can be introduced into the spray dryer at ambient pressure. Preferably, drying is carried out with hot air or hot nitrogen, preferably the gas is blown in the same direction as the sprayed liquid. The spray-drying may be carried out at an inlet temperature between 90 - 300°C, preferably between 100 - 200°C, more preferably between 110 - 150°C, especially between 110 - 120°C. A lower inlet temperature has the advantage of lower energy consumption as well as lower tendency for degradation of the PCE-type copolymer. The outlet temperature may be between 55 - 200°C, preferably between 60 - 150°C, more preferably between 65 - 100°C.

An aqueous solution of the polycarboxylate ether copolymer can be entered into the spray-dryer by any means known to the person skilled in the art such as nozzles, atomizers, or centrifuges. Any spray-dryer known to the person skilled in the art is suitable to produce a polycarboxylate ether copolymer in solid state. The size of the spray-dryer can be selected according to the intended throughput.

Additives such as anti-caking agents and/or anti-oxidants which stabilize the powder against thermo-oxidative degradation and self-ignition may be added prior to or during the spray-drying. Suitable anti-caking agents can be any known to the person skilled in the art. Examples for anti-caking agents include powdered cellulose, magnesium stearate, calcium carbonate, dolomite, clay, kaolin, vermiculite, bentonite, talc, slag, fly ash, silicates or aluminosilicates, and silicon dioxide, such as for example fumed silica, precipitated silica, silica gels or silica sols. Suitable anti-oxidants can be any known to the person skilled in the art. Examples for anti-oxidants are for example disclosed in WO 00/17263 and include alkylated monophenols, alkylated hydrochinones, alkylidene-bisphenols, hydroxylated benzyls, phenol-thiodiphenyl ethers, acylaminophenols, phenolic esters, and phenolic amides.

According to embodiments any such additives are added before the spray-drying process as this will lead to increased performance of such additives. The additives can be added to an aqueous solution of the polycarboxylate ether copolymer prior to spray drying. It is likewise possible to add one or more additives during the spray-drying process, for example via a separate feeding nozzle.

The resulting polycarboxylate ether copolymer in the solid state may be sieved in order to remove small agglomerates, which might potentially be formed.

The spray-drying process can be performed continuously or discontinuously.

Step e) of a process of the present invention may also be a step of oven drying and/or vacuum drying and/or drying in a fluidized bed. Such step e) may be performed in a drum dryer or in a belt dryer. In a preferred embodiment, the polycarboxylate ether copolymer prepared in step d) is transferred into the solid state in step e) by oven drying and/or vacuum drying at a temperature of 20 - 180 °C. The pressure can be normal pressure. However, it is also possible to perform step e) at reduced pressure, for example at a pressure of 900 mbar or lower, preferably at 500 mbar or lower. A lower pressure allows a faster process and/or reduction of the temperature needed. Where step e) is carried out by oven drying and/or vacuum drying it is particularly preferred to carry out step e) at 20 - 180°C and a pressure of not more than 100 mbar.

It is possible that a process of the present invention comprises an additional step f) of comminution of the polycarboxylate ether copolymer in the solid state. Such optional step f) can be carried out by crushing and/or grinding. Suitable mills include hammer mills, colloid mills, corundum mills, ball mills, planetary mills, impact mills, tube mills, rotor mills, disk mills, cutting mills, vibrating mills, jet mills, pin mills, drum mills, vertical mills, eddy current mills, or roller mills. It may be particularly convenient to carry out comminution in a cryogenic mill. Comminution, especially grinding, can therefore be carried out at temperatures between -196 °C and +80 °C.

In another aspect, the present invention relates to a polycarboxylate ether copolymer in the solid state obtained in a process as described above.

The term "solid state" is as defined above.

Such copolymers comprise or essentially consist of
a) repeating units M-1 of the general formula (IV) 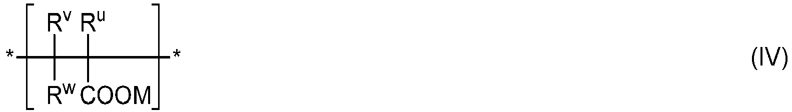 and
b) repeating units M-2 of the general formula (V) 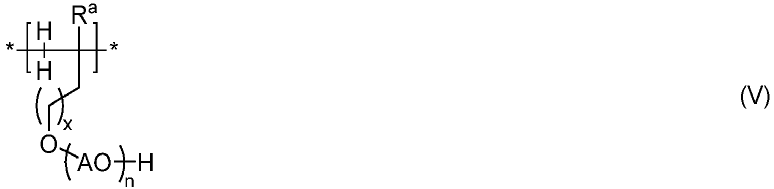 where
   R^{u}, R^{V} independently from each other is H or methyl,
   R^{w} is H or COOM,
   where M is H, an alkali metal, an alkaline earth metal, or an ammonium ion, or,
   where R^{w} is COOM, a ring may be formed between adjacent COOM groups, R^{a} is H or methyl,
   AO is a C2 - C12 oxyalkylene group,
   x = 0, 1,
   n = 2 - 350,
   and where the molar ratio of repeating units M1 to repeating units M-2 in the copolymer is between 90 : 10 - 10 : 90.

The repeating units M-1 and/or M-2 can be arranged along the backbone of the copolymer in a random, statistical manner, or in a block-wise manner, or in a mixture of random and block-wise manner, for example in a gradient-wise manner.

According to embodiments, a polycarboxylate ether copolymer in the solid state of the present invention does contain an impurity of the general structure (III) or any repeating unit derived from such impurity of the general structure (III) in not more than 10 wt%, preferably not more than 5 wt%, more preferably not more than 1 wt%, still more preferably not more than 0.5 wt%, especially not more than 0.01 wt%, in particular below 0.01 wt% in each case relative to the total dry weight of said polycarboxylate ether copolymer in the solid state.

According to preferred embodiments of the invention, the polycarboxylate ether copolymer in the solid state is a powder. However, the polycarboxylate ether copolymer in the solid state may also take the form of flakes, a granulate, a shaped block, a tablet or the like. The powder may be converted into another solid form for example by pressing.

A polycarboxylate ether copolymer in the solid state of the present invention can be easily dispersed or dissolved in water.

Polycarboxylate ether copolymers in the solid state according to the present invention can be used as dispersants for mineral binder compositions. Especially, polycarboxylate ether copolymers in the solid state of the present invention are useful in reducing the amount of water needed to achieve desired flow properties of a given mineral binder composition. Also, polycarboxylate ether copolymers in the solid state of the present invention are useful to reduce bleeding from a mineral binder composition. Finally, polycarboxylate ether copolymers in the solid state of the present invention are useful to increase the flow properties of a mineral binder composition at a given amount of water present.

In still another aspect, the present invention relates to a mineral binder composition comprising at least one mineral binder and a polycarboxylate ether copolymer in the solid state, said polycarboxylate ether copolymer in the solid state being as described above.

Within the context of the present invention a "mineral binder composition" is a composition comprising at least one mineral binder. The term "mineral binder" refers in particular to a binder selected from cements, calcium sulfate, lime, pozzolanes, latent hydraulic binders, or mixtures thereof.

According to embodiments, the mineral binder composition of the present invention is characterized in that said mineral binder is selected from cement, calcium sulfate, lime, pozzolane, latent hydraulic material, or mixtures thereof, preferably calcium sulfate or mixtures comprising calcium sulfate.

Cements especially Portland cements of type CEM I, II, III, IV or V (according to standard EN 197-1), calcium aluminate cements (according to the standard EN 14647:2006-01), and calcium sulphoaluminate cements. Of course, cements produced according to relevant alternative standards, for example the relevant ASTM or Chinese standards, are likewise suitable.

Calcium sulfate is meant to encompass natural gypsum, REA gypsum, calcium sulfate dihydrate, α- and β-calcium sulfate hemihydrate, and/or anhydrite.

According to preferred embodiments, the mineral binder composition of the present invention is characterized in that calcium sulfate is selected from natural gypsum, REA gypsum, anhydrite, α-calcium sulfate hemihydrate, β-calcium sulfate hemihydrate, calcium sulfate dihydrate, or mixtures thereof.

The term "lime" is meant to encompass natural hydraulic lime, formulated lime, hydraulic lime, and air lime as described in the standard EN 459-1:2015.

Pozzolanes and latent hydraulic materials preferably are selected from the group consisting of clay, calcined clay, especially metakaolin, slag, kiln dust, microsilica, fly ash, pyrogenic silica, precipitated silica, silica fume, sodocalcic glass, borocalcic glass, zeolite, rice husk ash, burnt oil shale, and natural pozzolane such as pumice and trass.

Besides at least one mineral binder and a polycarboxylate ether copolymer in the solid state, a mineral binder composition of the present invention typically also comprises inert substances such as aggregates, especially gravel and/or sand, and/or fillers such as limestone or quartz flour. Further additives such as accelerators, retarders, thickeners, defoamers, pigments, fibers, water retention agents, biocides may additionally be present. Water may additionally be present.

According to some embodiments, a mineral binder composition of the present invention comprises (relative to the total dry weight of the mineral binder composition unless otherwise noted)
a) at least 25 wt% of a mineral binder, which mineral binder comprises between 5 and 100 wt% (relative to the total weight of dry mineral binder) of calcium sulfate,
b) 0.01 - 10 wt%, preferably 0.1 - 2 wt% of a polycarboxylate ether copolymer in the solid state as described above,
c) optionally 30 - 74.99 wt% of aggregate and/or filler,
d) optionally further additives, and
e) optionally water.

### Examples

### A - Production examples

### A.1 - Measurement methods

HPLC measurements were done using a column MGII 100 Å, 5 µm, 10 mm (I.D.) × 250 mm manufactured by Shiseido Fine Chemicals. The eluent was a mixture of acetonitrile and water (45:55 by volume). The sample to be measured was a 10% solution in the eluent. 100 µL of sample were injected and the measurement was done at a flow rate of 1.0 mL/min at a column temperature of 40°C. The detector used was a Waters 2414 RI detector. The analysis software was Empower 2 by Waters Sampling. Generally, the compound **I** of general formula (II) has a higher retention time as compared to the alkoxylated alcohol **A** of the general formula (I).

The content of the compound **I** of general formula (II) can be calculated from the surface area ratio in the chromatogram by using the following equation:

c_{I} = [SA_{I} / (SA_{I} + SA_{A})] * 100

where c_{I} = content of the compound **I** of general formula (II), SA_{I} = surface area of the compound **I** of general formula (II), SA_{A} = surface area of the alkoxylated alcohol **A** of the general formula (I).

### A.2 - Preparation of HPEG solution 1

An aqueous solution of methallyl-started polyethyleneoxide (HPEG with molecular mass Mw = 4000 g/mol) was prepared by dissolving 220g of HPEG in 220 g of water. Aqueous HCI (1M) was added to adjust the pH to 2.0. The resulting solution was stirred for 8h at 25 °C and then the pH was adjusted with 1M NaOH to 4.5 to yield HPEG solution 1. The content of isomer (Isomethallyl-isomer of HPEG) was measured by HPLC as described above in the HPEG solution 1 as well as in the HPEG used as starting material (as 50% solution in water). In the HPLC chromatogram of the HPEG solution 1 none of the isomer was detectable. The HPEG used as starting material had an isomer content of 10 wt%. The isomer content was thus reduced by the acid treatment.

### A.3 - Preparation of polycarboxylate polymer PC1

A glass reactor with a thermometer, a stirrer, a dropping funnel, and a reflux condenser was charged with 480 g of the HPEG solution 1 prepared as described above. Thereto, a mixture of 3 g hydrogen peroxide (35%) and 7 g water, a mixture of 51 g acrylic acid and 55 g water, and a mixture of 2 g of natriumhydroxymethansulfinate and 11 g of water were added in parallel over a period of 60 minutes. Thereafter, the temperature was raised to 65°C and kept for 60 minutes to complete the polymerization reaction. Polymer PC1 was obtained in aqueous solution.

### A.5 - Preparation of polycarboxylate polymer powder PP1

Polymer powder PP1 was prepared by adding 3g of Ca(OH)₂, 68g of water, and 3g of fumed silica (Aerosil^{®} 150 from Evonik) to 200 g of PC1. The resulting suspension had a pH of appr. 13. The resulting suspension was dried in a lab spray dryer of the type Mini Spray Dryer B-290 (Büchi AG, Switzerland). Spray drying was conducted by inserting the suspension with a nozzle at the head of the spray dryer. Compressed air flowing in the same direction as the sprayed material was used at a flow rate of 600 L/h and with a pressure of 0.5 MPa. The inlet temperature was 120 °C. The dosage speed was adjusted so that the outlet temperature reached 65-70 °C. The discharged powder was separated from the air stream by means of a cyclotrone. This powder is polycarboxylate polymer powder PP1 which is according to the present invention.

### B - Mineral binder tests

### B.1 - Measurement methods

Flow was tested using a mini-cone having a diameter of 50 mm and a height of 51 mm. The mini-cone was filled with the respective gypsum slurry and the diameter of the gypsum cake that forms was measured as soon as no further flow was observed. The diameter in mm is referred to as the flow.

The setting start and the setting end were determined using the knife cut method according to DIN EN 13279-2:2014-03 and the thumb pressure method. The setting start is the time after which the cut edges no longer converge after a knife cut through the gypsum plaster cake. The setting end is the time after which water no longer escapes from the plaster cake when a pressure of approx. 5 kg is applied by pressing with the thumb. Alternatively, the setting start and the setting end can also be determined with the Vicat needle device according to DIN EN 13279-2:2014-03.

Slump flow was measured after the time indicated in below tables in accordance with standard EN 12350-5 with the only exception that a cone with 50 mm diameter at the bottom was used.

Compressive strength was measured after the time indicated in below tables according to standard EN 12190 on 4x4x16cm prisms. Curing of the prisms was done as follows: 24 h curing in mould at 20°C / 65% r.h., followed by demoulding and 48 h curing in sealed plastic bag at 20 °C, followed by 25 days at 20°C / 65% r.h.

### B.2 - Example 1

199.6 g of β-calcium sulfate hemihydrate, 0.4 g calcium sulfate dihydrate, and 0.22 of the respective polycarboxylate ether in the solid state as indicated in below table 1 were thoroughly mixed until visually homogeneous (except for example 1-1 where no PCE was added). To this mixture water was added in an amount to realize a weight ratio of calcium sulfate to water of 0.69. The following table 1 shows the results.

**Table 1: results (example 1-1 not according to the present invention)**

| | 1-1 | 1-2 |
|---|---|---|
| polycarboxylate ether in the solid state | none | PP1 |
| Flow [mm] | 167 | 219 |
| Setting start [min] | 5.5 | 5.5 |
| Setting end [min] | 13.75 | 15 |

Results of table 1 show that a polycarboxylate ether in the solid state of the present invention significantly increases the flow of a gypsum slurry at given amount of water. At the same time the increase in setting time end is acceptable for practical applications.

### B.3 - Example 2

A dry mortar was prepared consisting of 35 wt% of a ternary binder system consisting of 69 mass parts of CEM I 52.5 R, 26 mass parts of calcium aluminate cement, and 5 mass parts of anhydrite, 40 wt% of sand F33, 21.9 wt% of fine limestone filler, 0.7 wt% of slaked lime, 0.15 wt% of tartaric acid, 0.04 wt% of lithium carbonate, and 2.2 wt% of further additives (redispersible polymer powder, defoamer, thickener). To this dry mortar 0.4 g of the respective polycarboxylate ether in the solid state as indicated in below table 2 were added to each 100 g of dry mortar (except for example 2-1 where no PCE was added). Then water was added in an amount to realize a weight ratio of powder to water of 0.23 and the mixture mixed on a Hobart mixer on speed #1 for 2 minutes. The following table 2 shows the results.

**Table 2: results (example 2-1 not according to the present invention)**

| | 2-1 | 2-2 |
|---|---|---|
| polycarboxylate ether in the solid state | none | PP1 |
| Slump Flow (0 min) [mm] | 63 | 104 |
| Slump Flow (15 min) [mm] | c | 143 |
| Slump Flow (30 min) [mm] | c | 141 |
| Compressive strength 1d [MPa] | 11.1 | 11.3 |
| Compressive strength 7d [MPa] | 23.7 | 29.6 |
| Compressive strength 28d [MPa] | n.m. | 31.5 |

| | | |
|---|---|---|
| n.m.: not measured c: cannot be measured | | |

## Claims

1. A process for the production of a polycarboxylate ether copolymer in the solid state, said process comprising the steps of
a) providing a first type of monomer having the general structure (I), 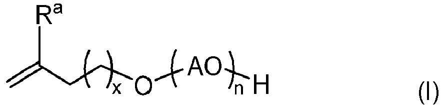 where
R^{a} is H or methyl,
AO is a C2 - C12 oxyalkylene group,
x = 0, 1,
n = 2 - 350,
b) treating the first type of monomer provided in step a) with an acid,
c) providing a second type of monomer having the general structure (II) 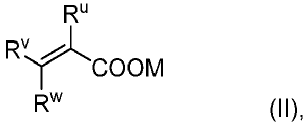 where
R^{u}, R^{V} independently from each other is H or methyl,
R^{w} is H or COOM,
where M is H, an alkali metal, an alkaline earth metal, or an ammonium ion, or, where R^{w} is COOM, a ring may be formed between adjacent COOM groups,
d) copolymerizing the monomer obtained in step b) and the monomer provided in step c) to obtain a copolymer which is a polycarboxylate ether, and
e) transferring the copolymer obtained in step d) into the solid state,
where a liquid, preferably water, is added in step a) and/or b) and/or d).

2. The process as claimed in claim 1, **characterized in that** the copolymer which is a polycarboxylate ether is obtained in step d) as a solution or dispersion in water with a ratio of the copolymer which is a polycarboxylate ether of 20 - 75 wt%, preferably 40 - 60 wt%.

3. The process as claimed in any of the preceding claims, **characterized in that** in step e), the copolymer obtained in step d) is transferred into the solid state by spray drying, oven drying, vacuum drying, drying in a fluidized bed, dielectric drying, supercritical drying, or lyophilization, preferably by spray drying.

4. The process as claimed in any of the preceding claims, **characterized in that** the first type of monomer provided in step a) and having the general structure (I) comprises an impurity of the general structure (III), 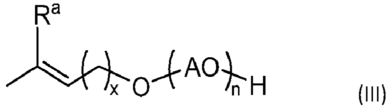 where
R^{a}, AO, x, and n are as defined for the general structure (I).

5. The process as claimed in claim 4, **characterized in that** in step b) the content of the impurity of the general structure (III) in the first type of monomer of general structure (I) is reduced to not more than 10 wt%, preferably not more than 5 wt%, more preferably not more than 1 wt%, still more preferably not more than 0.5 wt%, especially not more than 0.01 wt%, in particular below 0.01 wt% in each case relative to the total dry weight of the first type of monomer of general structure (I).

6. The process as claimed in any of the preceding claims, **characterized in that** the acid used in step b) has a pKa value of not more than 4.5, preferably not more than 2, more preferably not more than 0.

7. The process as claimed in any of the preceding claims, **characterized in that** the acid used in step b) is selected from the group consisting of hydrohalic acids, preferably hydrochloric acid or hydrobromic acid, perchloric acid, chloric acid, iodic acid, sulfonic acids, preferably methane sulfonic acid, 2-acrylamido-2-methylpropane sulfonic acid, or para-toluene sulfonic acid, nitric acid, nitrous acid, phosphoric acid, oxalic acid, chloroacetic acid, trifluoroacetic acid, citric acid, formic acid, lactic acid, ascorbic acid, benzoic acid, picric acid, maleic acid, and acrylic acid.

8. The process as claimed in any of the preceding claims, **characterized in that** step b) is carried out at a temperature of between 15 - 100°C, preferably 20 - 60°C, and a pressure of appr. 1013 mbar.

9. A polycarboxylate ether copolymer in the solid state obtained in a process as claimed in at least one of the claims 1 - 8.

10. A polycarboxylate ether copolymer in the solid state as claimed in claim 9, **characterized in that** it contains an impurity of the general structure (III) or any repeating unit derived from such impurity of the general structure (III) in an amount of not more than 10 wt%, preferably not more than 5 wt%, more preferably not more than 1 wt%, still more preferably not more than 0.5 wt%, especially not more than 0.01 wt%, in particular below 0.01 wt% in each case relative to the total dry weight of the polycarboxylate ether copolymer in the solid state.

11. A mineral binder composition comprising at least one mineral binder and a polycarboxylate ether copolymer in the solid state, said polycarboxylate ether copolymer in the solid state being as claimed in at least one of claims 9 or 10.

12. A mineral binder composition as claimed in claim 11, **characterized in that** said mineral binder is selected from cement, calcium sulfate, lime, pozzolane, latent hydraulic material, or mixtures thereof, preferably calcium sulfate or mixtures comprising calcium sulfate.

13. A mineral binder composition as claimed in claim 12, **characterized in that** calcium sulfate is selected from natural gypsum, REA gypsum, anhydrite, α-calcium sulfate hemihydrate, β-calcium sulfate hemihydrate, calcium sulfate dihydrate, or mixtures thereof.

14. A mineral binder composition as claimed in at least one of claims 11 - 13, **characterized in that** said mineral binder composition comprises (relative to the total dry weight of the mineral binder composition unless otherwise noted)
a) at least 25 wt% of a mineral binder, which mineral binder comprises between 5 and 100 wt% (relative to the total dry weight of mineral binder) of calcium sulfate,
b) 0.01 - 10 wt%, preferably 0.1 - 2 wt% of a polycarboxylate ether copolymer in the solid state as claimed in at least one of claims 9 or 10,
c) optionally 30 - 74.99 wt% of aggregate and/or filler,
d) optionally further additives, and
e) optionally water.
